# EUROPEAN PATENT APPLICATION

(11) **EP 1 777 641 A1**
(43) Date of publication of application: **25.04.2007**
(21) Application number: 06255330.0
(22) Date of filing: 17.10.2006
(51) Int. Cl.: G06F 21/20

(54) **Biometric authentication system**

(30) Priority: 17.10.2005 US 727406 P; 07.02.2006 US 771007 P
(71) Applicant: Saflink Corporation, Kirkland, WA 98034 (US)
(72) Inventor: Jensen, Gregory C., Redmond, WA 98053 (US); Kierstead, Jeremy, Issaquah, WA 98029 (US); McReynolds, Jesse, Buena Park, CA 90620 (US); Mercredi, Dwayne, Bothell, WA 98011 (US); Vance, Joiachim, Mission Viejo, CA 90620 (US)
(74) Representative: Findlay, Alice Rosemary

(57) **Abstract**

An apparatus, method and program product for enabling biometric authentication that includes receiving a biometric submission (82) at a biometric device (60), and in response to an authentication of the submission (92), providing a cryptographic credential (68) from a computer (15, 30) to the biometric device (60) for use in a subsequent cryptographic purpose (100). In this manner, the biometric device (60) may subsequently mimic properties of a smart card.

## Description

The present invention relates generally to authentication technologies, and more particularly, to enabling access to computer resources in response to matching a biometric submission captured at a biometric device.

Considerations regarding the safeguarding of computer resources have become ubiquitous throughout industry, government and private channels. Security concerns are exacerbated in networked environments, where the desire to exchange data is often at odds with attempts to ensure system integrity. Networks typically include one or more servers and numerous client computer terminals, referred to herein as local, or client computers, communicating over network communication links. The communication links may be comprised of cables, wireless links, optical fibers, and/or other communication media. Similarly, the local computers may be desktop personal computers, laptop computers, PDA's, or other computing devices to which or through which a user desires to obtain access. Secure networks commonly incorporate password software and procedures configured to restrict and control access to the network. However, despite such provision, password-controlled access remains fraught with security concerns, such as ease of duplication. Users may additionally have difficulty remembering passwords.

Consequently, many networks rely on biometric authentication processes to safeguard computer resources. With biometric authentication, a measurable physical characteristic of a potential user is obtained as a signature rather than a password. Such physical characteristics are usually very unique to the user and thus difficult to duplicate, defeat, or forget. Examples include fingerprints, retinal scans and voice signatures. Other examples might include hand, facial and/or cranial measurements and dimensions. For biometric access, a user who desires to access a network must first be enrolled on the network with that person's unique biometric data. That unique biometric data is typically obtained by the user logging in to the network with an administrator who oversees the process, such as at an administrator's or specially designated enrollment computer.

At that designated computer, the user will provide his or her user ID and also provide the requisite biometric data to one or more biometric access devices associated with the computer, such as by placing the appropriate finger in a fingerprint scanner or reader, exposing the eye to a retinal scan, or speaking into a microphone or the like, by way of examples, connected to that designated computer. The administrator typically oversees this process, which results in the generation of a set of data referred to herein as a biometric identification record (BIR), or perhaps multiple BIR's depending upon the number and type of biometric access devices to be used. The BIR is then stored on a network server as enrollment BIR data in a file associated with the particularly identified user, such as by associating the enrollment BIR data with that user's ID.

When a user desires thereafter to access the network through a local computer coupled to the network, the user again provides the ID and the requested biometric information through a biometric access device associated with the local computer. The biometric data captured or otherwise submitted at the local computer produces a temporary BIR referred to as a template. The local computer and the server on the network communicate in an effort to authenticate the capture BIR data with the enrollment BIR data to determine whether the accessing user should be given access as if he or she were the privileged user who had enrolled at the network.

The enrollment BIR data is highly unique, as is the capture BIR data, thus presenting a formidable challenge to falsify, or otherwise defeat for purposes of accessing the network.

While biometrics offer the above authentication advantages, the transmission mechanisms of the systems supporting the biometrics may remain vulnerable to exploitation. For instance, conventional biometric applications rely on the existence of a password that is transparently passed on to complete a logon process. This password is typically known by the user, creating the same set of vulnerabilities around passwords in the biometric solution as exists when passwords alone are used. Even where the password is not known by the user, many of the attacks against the password authentication system may still succeed.

A second area of vulnerability concerns the connection for the biometric device to the computer at which the user attempts the logon. Physical connections, device drivers and communication protocols of computer devices are typically not designed for high assurance security use. As a consequence, such connections and devices remain vulnerable to "man in the middle" and "record/playback" attacks.

In part because of these vulnerabilities, many system designers are reluctant to incorporate or accommodate biometric authentication within their systems. The benefits of biometrics thus remain unrealized in many applications. There is consequently a need for enabling more secure, robust and accepted applications of biometric authentication.

### Summary of the Invention

The present invention provides an apparatus, program product and method for enabling biometric authentication in a manner that includes receiving a biometric submission at a biometric device, and in response to an authentication of the submission, providing a cryptographic credential from a computer to the biometric device, preferably a cryptographic credential, for use in a subsequent cryptographic purpose.

In this manner, the preferred embodiment may provide biometric authentication with the widely accepted assurance level and characteristics of a cryptographic token. The system generates and stores private and public keys for device security, guarantees device trust to domain controllers, and acts as a dynamic smart card representing the cryptographic token for user logon events. Any number of different biometric types, i.e., iris, fingerprint, etc., may be used in conjunction with embodiments of the invention.

Embodiments leverage the position and resources of the biometric device to capture a biometric sample from a user, and process that sample into a digitally signed biometric template. The signed template may be used at a server to authenticate the biometric submission. Communications between the client's local computer and the server computer may be encrypted. After a successful biometric authentication, a user certificate and encrypted private key associated with the user may be loaded onto the biometric device. The certificate and key may then be used for a subsequent cryptographic use, such as for use for the smart card logon process as part of a Windows^{®} smart card logon.

Embodiments secure the connection between the biometric device and the authenticating computer by making the biometric device a trusted device. In this manner, embodiments may compliment public key cryptography in existing programs.

Credentials and authentication policies, i.e., requirements for authentication for a use or group of users may be readily updated. Exemplary such requirements may include whether a user needs to provide multiple forms of authentication, e.g., a password and/or token, or rules requiring a user to submit a particular type of biometric sample, e.g., a retinal scan and/or fingerprint submission.

For additional security, the server may store a list of pre-approved, trusted biometric devices. Only biometric samples captured by biometric devices on the list stored by the server may be accepted by the server. These biometric devices may be identified by data passed on to the server along with the biometric template. Such data may comprise an address or serial number of the biometric device, among other potential identifiers. An administrator may update the list of trusted biometric devices as appropriate.

The invention will now be further described by way of example with reference to the accompanying drawings in which:
Fig. 1 is a block diagram of a system consistent with the invention.
Fig. 2 is a flowchart outlining method steps suited for execution by the system of Fig. 1.

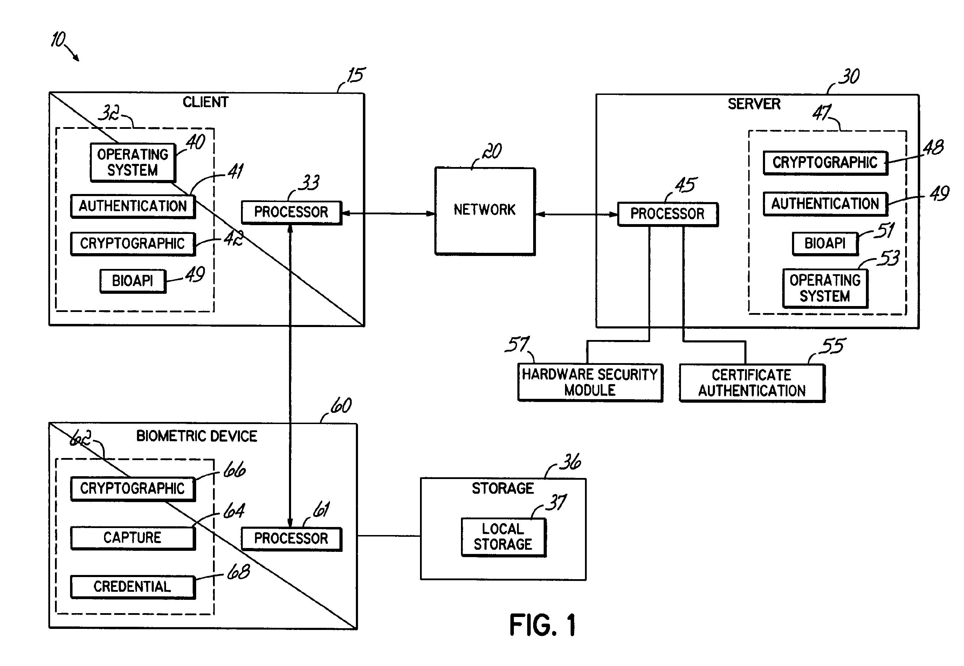

Turning to the Drawings, Fig. 1 shows a networked computer system 10 for enabling biometric authentication in a manner that includes receiving a biometric submission at a biometric device, and in response to an authentication of the submission, providing a credential from a computer 15, 30 to the biometric device 60, preferably a cryptographic credential, for use in a subsequent cryptographic purpose. The system includes a network computer 15 (e.g., lap top, desktop or PC-based computer, workstation, etc.), which may or may not be in communication with a network 20.

When communicating with the network 20, the client computer 15 may communicate with a server computer 30. The system 10 will hereinafter also be referred to as a "computer system," or "computer," although it should be appreciated that the terms "apparatus" and "access control device" may also include other suitable programmable electronic devices, such as a vault access controller or a controller operating a vehicle ignition switch, among many others. Moreover, while only one server computer 30 is shown in Fig. 1, any number of computers and other devices may be networked through network 20.

Furthermore, while the system 10 of Fig. 1 is set up for networked authentication, client computer 15 may alternatively authenticate a user when disconnected from or otherwise in use without the network 20. That is, computers 15 and 30 are configured for either a networked or standalone token authentication. As such, client computer 15 is shown having various memory components that may not be utilized when a network authentication at the server computer 15 is attempted. Conversely, the server computer 15 may not be utilized when a biometric submission is authenticated in standalone mode at the client computer 15, i.e., when disconnected from the server computer 15.

Computer 15 typically includes at least one processor 33 coupled to a memory 32. Processor 33 may represent one or more processors (e.g., microprocessors), and memory 32 may represent the random access memory (RAM) devices comprising the main storage of computer 15, as well as any supplemental levels of memory, e.g., cache memories, non-volatile or backup memories (e.g., programmable or flash memories), read-only memories, etc. In addition, memory 32 may be considered to include memory storage physically located elsewhere in computer 15, e.g., any cache memory present in processor 33, as well as any storage capacity used as a virtual memory, e.g., as stored within a database, or on another computer coupled to computer 15 via network 20.

Computer 15 also may receive a number of inputs and outputs for communicating information externally. For interface with a user, computer 15 typically includes one or more input devices. The client computer 15 additionally may include a display (e.g., a CRT monitor, an LCD display panel, and/or a speaker, among others). It should be appreciated, however, that with some implementations of the client computer 15, direct user input and output may not be supported by the computer 15, and interface with the computer 15 may be implemented through a client computer or workstation networked with the client computer 15.

For additional storage, computer 15 may also include one or more mass storage devices 36 configured to store a database/local storage 37. Exemplary devices 36 can include: a floppy or other removable disk drive, a flash drive, a hard disk drive, a direct access storage device (DASD), an optical drive (e.g., a CD drive, a DVD drive, etc.), and/or a tape drive, among others. Furthermore, computer 15 may include an interface with one or more networks 20 (e.g., a LAN, a WAN, a wireless network, and/or the Internet, among others) to permit the communication of information with other computers coupled to the network 20. It should be appreciated that computer 15 typically includes suitable analog and/or digital interfaces between processor 33 and each component in communication with the computer 15.

Computer 15 operates under the control of an operating system 40, and executes various computer software applications, components, programs, objects, modules, e.g., a biometric authentication program 41, a cryptographic program 42 for encrypting and decrypting data, and BioAPI 49, among others. BioAPI program 49 regards a programming interface supplied by biometric service providers that provides enrollment and verification services for installed biometric devices (e.g., iris or fingerprint scanner, and/or a microphone, among others).

Various applications, components, programs, objects, modules, etc. may also execute on one or more processors in another computer coupled to computer 15 via a network 20, e.g., in a distributed or client-server computing environment, whereby the processing required to implement the functions of a computer program may be allocated to multiple computers over a network.

The memory 32 shown in Fig. 1 includes various data components that may be utilized by the programs. As with other memory components described herein in the context of the system 10, the data may be stored locally as shown in Fig. 1, or may alternatively be remotely accessed.

Biometric device 60 may comprise any device configured to capture a biometric submission. To this send, the biometric device 60 may include a processor 62 and a memory 63. The memory 63 may comprise a biometric capture program 64, and a cryptographic program 66, among others, as well as memory for storing a credential, e.g., a digital certificate, nonce, biometric record, data string and/or a cryptographic key. A credential may comprise any data that may be compared to other data to determine if a user or machine will gain access to a resource.

As shown in Fig. 1, the server computer 30 may include many of the same or similar components as included in the client computer 15. For instance, the server computer 30 may include: a processor(s) 45, a memory 47, a cryptographic program 48, BIR Authentication program 49, BioAPI 51 and an operating system 53. The server computer 30 may furthermore communicate with additional memory 55 storing keys, templates, certificates and/or other credentials stored in association with a plurality of users.

The discussion hereinafter will focus on the specific routines executed by the exemplary system of Fig. 1. In general, the routines executed to implement the embodiments of the invention, whether implemented as part of an operating system or a specific application, component, program, object, module or sequence of instructions will be referred to herein as "programs," or simply "program code." The programs typically comprise one or more instructions that are resident at various times in various control device memory and storage devices. When a program is read and executed by a processor, the program causes the access control device to execute steps or elements embodying the various aspects of the invention.

Moreover, while the invention has and hereinafter will be described in the context of fully functioning access control devices, such as computer systems, those skilled in the art will appreciate that the various embodiments of the invention are capable of being distributed as a program product in a variety of forms, and that the invention applies equally regardless of the particular type of computer readable signal bearing media used to actually carry out the distribution. Examples of computer readable signal bearing media include but are not limited to recordable type media such as volatile and non-volatile memory devices, floppy and other removable disks, hard disk drives, optical disks (e.g., CD-ROM's, DVD's, etc.), among others, and transmission type media such as digital and analog communication links.

In addition, various programs described hereinafter may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

Those skilled in the art will recognize that the exemplary environment illustrated in Fig. 1 is not intended to limit the present invention. Indeed, those skilled in the art will recognize that other alternative hardware and/or software environments may be used.

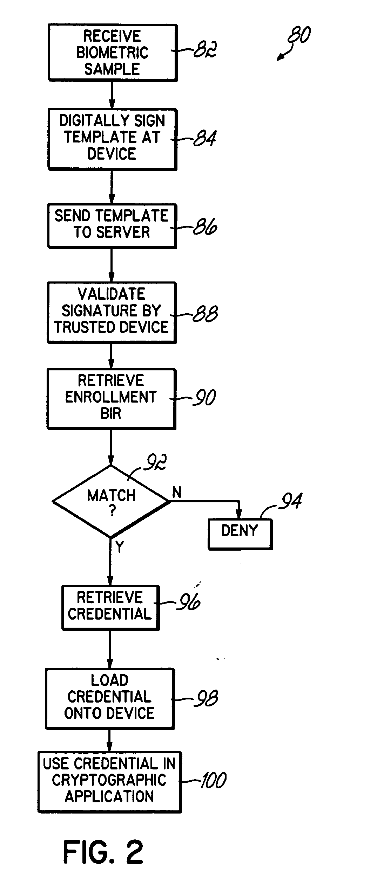

Fig. 2 is a flowchart 80 having steps executable by the system 10 of Fig. 1. At block 82, the user may provide a biometric sample to the biometric device 60 in response to a displayed prompt. For efficiency considerations, the user may also enter their user ID. As described below, this optional user ID may be used to more quickly recall a user's enrollment template during authentication.

The biometric device 60 may convert the biometric sample into a template. The biometric device 60 may then digitally sign or otherwise encrypt the template at the device 60. The digital signature at block 84 may include the biometric device signing the authentication template with a signing key, and potentially, a time stamp for further validation. To this end, the biometric device 60 may additionally generate a nonce, and hash the nonce in combination with the template. The nonce comprises a value that is only used once. As such, any previous nonce on the biometric device 60 will be replaced and deleted, although it may be saved initially for validation purposes, as described below. The hashed nonce and template combination may be encrypted, along with the template, prior to sending the package to the server at block 86. One skilled in the art will appreciate that the there are many different ways in which the template may be alternatively or additionally encrypted at block 84. The nonce may be saved for future validation at the biometric device 60.

The authentication template and signature may be routed through the client computer 15 to the server computer 30. At block 88, the server computer 30 may validate the signature on the authentication template and determine if the biometric device 60 is trusted. The server computer 30 may determine if the device is trusted by checking a list of trusted devices stored within memory 47. Information communicated from the biometric device 60 to the server computer 30 and used for identification may include a serial number or address, among other identifying features.

If the device is determined by the computer server 30 to be trusted, then the enrollment biometric record of the user may be retrieved at block 90. As discussed herein, retrieval of the correct enrollment biometric record may be facilitated by the user's ID being included along with the transmission. That is, the user ID may be matched efficiently with the enrollment biometric record associated with that user ID.

If no match between the submitted biometric template and the stored enrollment biometric record can be made, then the authentication process is denied at block 94. Alternatively, a match within acceptable parameters may prompt the server computer 30 to retrieve from memory 47, 55 a credential associated with the user ID. For instance, the credential may comprise a certificate and encrypted private key associated with the user. Other credentials could include any data used for a template.

The credential is loaded at block 98 onto the biometric device 60. More particularly, the biometric device 60 may decrypt the credential(s) with a device private key and validate the nonce against most recent nonce generated by device 60. This helps protects against replay of encrypted credentials by detecting if the credentials were not sent from the server as a result of a recent biometric capture. The stored nonce may be deleted after the comparison.

With the credential loaded as such at block 100, the credential may be used and a subsequent cryptographic application involving the submission of the credential to gain access to a protected resource. The device 60 then makes the user credential (user key pair and certificate) available for user authentication. Exemplary subsequent applications may include Windows^{®} smart card logon using the Kerberos^{®}, website authentication or secure communications, among uses.

In practice, a user may initially provide their user ID. The system 10 may retrieve an applicable authentication policy, and prompt the user for a biometric submission. After the user provides the biometric sample, the system 10 processes the raw sample data into a biometric template and digitally signs the template. The signed template may be sent to the server 30 over an encrypted channel. The server 30 may then validate that the signed template originated from a trusted device and is a part of the current session to ensure against replay attacks, i.e., where a hacker records and later replays a biometric submission. The server 30 may then retrieve and encrypt the enrollment template and attempt to match against the enrollment and verification templates.

If the result is successful, the server 30 may retrieve the user's digital certificate and an encrypted private key that can only be decrypted by the biometric device 60 from which the user authenticated. This key and certificate may then be provided to the client computer 15. The client computer 15 may load the key and certificate on the biometric device 60. The biometric device 60 may thus function as a smart card-like security token for that user.

While the present invention has been illustrated by the description of embodiments thereof, and while the embodiments have been described in considerable detail, additional advantages and modifications will readily appear to those skilled in the art. For instance, while certain embodiments may facilitate transparent and automatic submissions of password, other embodiments accommodate systems where one-time passwords are used, e.g., where the user enters a displayed one-time password into any password dialog using a keyboard, voice receiver, or PIN pad without needing to interface the device directly to the client machine. Furthermore, a program of the invention may encrypt conventional passwords and other information at any step delineated in the flowcharts.

Embodiments do not require and may not use passwords. That is, accounts may be created without passwords. Administrators consequently do not need to create, reset or update passwords and related policies. Moreover, the system 10 may create an audit trail tracking and recording the processes of the flowchart 80.

One skilled in the art will appreciate that the steps flowchart 80 may be rearranged with respect to other steps, augmented and/or omitted in accordance with the principles of the present invention. That is, the sequence of the steps in the included flowchart 80 may be altered, to include omitting certain processes without conflicting with the principles of the present invention. Similarly, related or known processes can be incorporated to complement those discussed herein.

It should furthermore be understood that the embodiments and associated programs discussed above are compatible with most known cryptographic authentication and token processes and may further be optimized to realize even greater efficiencies. The invention in its broader aspects is, therefore, not limited to the specific details, representative apparatus and method, and illustrative examples shown and described. For instance, an access control device may comprise any device having electronic access controls, to include not only computers, but networks, buildings, handheld devices, etc.

Where the local, client computer is disconnected from the network server, a user may still logon biometrically. The client computer may store the cryptographic credential in a local data store after one or each successful, connected authentication. The client computer may thus retrieve the encrypted enrollment template from the local data store and pass it to the biometric device for decryption and matching against the user's live sample. Once the user authenticated, the user's certificate and private key may be decrypted and loaded for use onto the biometric device. The local data store may thus be accessed only after being biometrically authenticated.

## Claims

1. A method of using a biometric to control access to a resource, the method comprising:
receiving a biometric submission at a biometric device;
comparing the biometric submission to a stored biometric record;
determining if there is an acceptable match between the biometric submission and the stored biometric record, and;
in response to the acceptable match, initiating storage at the biometric device of a credential stored at a computer in communication with the biometric device.

2. The method of claim 1, further comprising using the credential at the biometric device for a subsequent cryptographic purpose.

3. The method of either claim 1 or claim 2, further comprising encrypting the biometric submission.

4. The method of claim 3, wherein encrypting the biometric submission further comprises digitally signing the biometric submission.

5. The method of any preceding claim, further comprising verifying at the computer that the biometric device is a trusted device.

6. The method of any preceding claim, further wherein initiating the storage of the credential further comprises the computer initiating the storage.

7. The method of any preceding claim, further comprising receiving a user ID.

8. The method of any preceding claim, further comprising updating the credential stored at the computer.

9. An apparatus, comprising:
a biometric device configured to receive a biometric submission; and
a computer in communication with the biometric device and storing a credential associated with a user, the computer further comprising a program resident in a memory, the program configured to initiate storage at the biometric device of the credential in response to an acceptable match between the biometric submission and a stored biometric record.

10. The apparatus of claim 9, wherein the computer is local to the biometric device.

11. The apparatus of claim 9, wherein the computer is remote from the biometric device.

12. The apparatus of any one of claims 9 to 11, wherein the credential stored at the biometric device is used for a subsequent cryptographic purpose.

13. The apparatus of any one of claims 9 to 12, wherein the program is further configured to encrypt the biometric submission.

14. The apparatus of any one of claims 9 to 12, wherein the program is further configured to digitally sign the biometric submission.

15. The apparatus of any one of claims 9 to 14, wherein the program is further configured to verify that the biometric device is a trusted device.

16. The apparatus of any one of claims 9 to 15, wherein the program is further configured to audit actions of a user attempting to use at least one of the biometric device and the computer to gain access to a resource.

17. The apparatus of any one of claims 9 to 16, wherein the credential is one of a plurality of credentials associated with a plurality of users.

18. The apparatus of any one of claims 9 to 17, wherein the program is further configured to update the credential.

19. The apparatus of any one of claims 9 to 18, wherein the program is further configured to maintain a list of trusted biometric devices within a memory.

20. A program product, comprising:
program code resident within a computer in communication with a biometric device configured to receive a biometric submission, the program code configured to initiate storage at the biometric device of a credential also stored at the computer in response to an acceptable match between the biometric submission and a stored biometric record; and
a signal bearing medium bearing the program code.
